(19) Europäisches Patentamt
European Patent Office
Office européen des brevets

(11) EP 0 521 341 B1

(12) EUROPÄISCHE PATENTSCHRIFT

(45) Veröffentlichungstag und Bekanntmachung des Hinweises auf die Patenterteilung:
14.05.1997 Patentblatt 1997/20

(51) Int Cl.$^6$: H04B 10/18

(21) Anmeldenummer: 92110192.9

(22) Anmeldetag: 17.06.1992

(54) **Entzerrer für optisch übertragene Nachrichtensignale**

Equalizer for optically transmitted communication signals

Egaliseur pour signaux de communications transmis par voie optique

(84) Benannte Vertragsstaaten:
AT BE CH DE DK ES FR GB IT LI NL SE

(30) Priorität: 29.06.1991 DE 4121569

(43) Veröffentlichungstag der Anmeldung:
07.01.1993 Patentblatt 1993/01

(73) Patentinhaber:
• Alcatel SEL Aktiengesellschaft
D-70435 Stuttgart (DE)
Benannte Vertragsstaaten:
DE
• ALCATEL N.V.
NL-1077 XX Amsterdam (NL)
Benannte Vertragsstaaten:
BE CH DK ES FR GB IT LI NL SE AT

(72) Erfinder:
• Heidemann, Rolf, Dr.
W-7146 Tamm (DE)
• Krimmel, Heinz
W-7000 Stuttgart 30 (DE)
• Junginger, Bernhard
W-7033 Herrenberg (DE)

(74) Vertreter: Kugler, Hermann, Dipl.-Phys. et al
Alcatel Alsthom
Intellectual Property Department,
Postfach 30 09 29
70449 Stuttgart (DE)

(56) Entgegenhaltungen:
WO-A-91/07027

• ELECTRONICS LETTERS. Bd. 27, Nr. 5, 28. Februar 1991, STEVENAGE GB Seiten 421 - 423 GYSEL ET AL 'Electrical predistortion to compensate for combined effect of laser chirp and fibre dispersion'
• PATENT ABSTRACTS OF JAPAN vol. 13, no. 437 (E-826)1989
• THIRD EUROPEAN CONFERENCE ON OPTICAL COMMUNICATION September 1977, M NCHEN DE Seiten 202 - 204 YAMAGUCHI ET AL 'Equaliser for step-index fibre transmission'
• DTV-Lexikon der Physik,November 1970 MUNCHEN,Seiten 36,37. EP-A-0658866

**Beschreibung**

Die Erfindung betrifft eine Schaltungsanordnung zum Entzerren von nichtlinear verzerrten über optische Nachrichtenübertragungssysteme übertragenen Signalen.

Eine derartige Schaltungsanordnung ist bekannt aus Electronics Letters 28th February 1991, Vol. 27, No. 5, Seiten 421 bis 423. Sie ist ein LC-Glied, dessen Kapazität durch die Parallelschaltung eines Kondensators und der Kapazität einer Kapazitätsdiode (dort "varactor diode" genannt) gebildet ist. Deren Kapazität hängt von der an ihr bestehenden Sperrspannung ab, die sich zusammensetzt aus einer geeignet gewählten Vorspannung und der am Eingang der Schaltung liegenden Signalspannung. Wegen der Abhängigkeit der Kapazität von der Signalspannung ergibt sich für die Signale eine spannungsabhängige Verzögerung.

Versuche haben gezeigt, daß mit dem bekannten LC-Glied eine ausreichende Entzerrung, die die Signale nicht unzulässig dämpft, nur möglich ist, sofern einerseits die zu entzerrenden Verzerrungen der Signale nicht zu groß sind und andererseits die Bandbreite der zu übertragenden Signale nicht zu groß ist. Die nichtlinearen Verzerrungen, die ein Signal, das optisch über eine Lichtwellenleiter-Strecke übertragen wird, erfährt und die durch die genannte Schaltungsanordnung entzerrt werden sollen, sind in erheblichem Maße verursacht durch den sogenannten "Laser-Chirp", d.h. einer von der Signalamplitude des optisch zu übertragenden elektrischen Signals abhängige unerwünschte Wellenlängenschwankung des optischen Signals, von der Wellenleiterdispersion des verwendeten Lichtwellenleiters und von dessen Länge. Je größer diese Einflußgrößen sind, je größer sind die nichtlinearen Verzerrungen, die das Signal erfährt.

Es hat sich gezeigt, daß mit einem Laser der Betriebswellenlänge von 1550 nm, der einen relativ geringen "Laser-Chirp" hat, mit einem Standard-Einmoden-Lichtwellenleiter und einem Entzerrer der eingangs genannten, bekannten Art eine befriedigende Signalübertragung möglich ist, wenn die Länge des Lichtwellenleiters nicht größer als 12 km und die Bandbreite der zu übertragende Signale nicht größer als 450 MHz ist. Sollen Signale entzerrt werden, die eine größere Lichtwellenleiter-Länge als 12 km durchlaufen haben, so bietet der bekannte Entzerrer nur die Möglichkeit, die Vorspannung der Kapazitätsdiode entsprechend niedrig einzustellen, wodurch aber die Grenzfrequenz des Entzerrers, d.h. die maximale Frequenz von dämpfungsfrei übertragenen Signalen, herabgesetzt wird. In anderen Worten: Soll der bekannte Entzerrer in der Lage sein, erhebliche Signalverzerrungen entzerren zu können, so ist seine Grenzfrequenz so niedrig, daß sie zur breitbandigen Signalübertragung, wie z.B. von Signalen des Kabelfernseh-Frequenzbandes, das bis 450 MHz reicht, zu gering ist.

Aus dem Konferenzartikel "Equalizer for step-index fibre transmission", von Yamaguchi et. al., Seiten 202 bis 204, Third European Conference on Optical Communication 1977, ist ein Equalizer für einen optischen Regenerator bekannt. Der Equalizer ist aus drei in Kollektorschaltung betriebenen Bipolartransistoren aufgebaut, die in Reihe geschaltet sind. Zwischen den Ausgang des ersten Bipolartransistors und der positiven Betriebsspannung ist eine steuerbare Kapazitätsdiode geschaltet. Zwischen den Ausgang des zweiten Bipolartransistors und der positiven Betriebsspannung ist eine weitere steuerbare Kapazitätsdiode geschaltet. Zwischen den Ausgang des dritten Bipolartransistors und der positiven Betriebsspannung ist ein RLC-Parallelschwingkreis mit nicht einstellbarer Resonanzfrequenz geschaltet. Der Equalizer ist für Grenzfrequenzen bis 32 MHz einsetzbar.

Es ist die Aufgabe der Erfindung, einen Entzerrer anzugeben, der einerseits für starke Verzerrungen geeignet ist und andererseits eine Grenzfrequenz hat, die hoch genug ist für eine breitbandige Signalübertragung, z.B. eine mit einem bis zu 600 MHz reichenden Frequenzband.

Die Aufgabe wird wie im Patentanspruch 1 angegeben gelöst. Weiterbildungen ergeben sich aus den Unteransprüchen.

Die Erfindung wird nun anhand der Zeichnungen durch Beispiele näher erläutert.

Es zeigen:

Fig. 1      den Zusammenhang zwischen der Kapazität einer Kapazitätsdiode und der an ihr liegenden Spannung zur Erläuterung der an den Entzerrer gestellten Anforderungen,

Fig. 2      das Prinzip des erfindungsgemäßen Entzerrers in Form einer LC-Kettenschaltung,

Fig. 3      eine Ausführungsform der Erfindung mit den an den Kapazitätsdioden liegenden Vorspannungen,

Fig. 4      eine Schaltung nach Fig. 3, bei der jeder Kapazitätsdiode eine zweite antiparallel geschaltet ist,

Fig. 5      eine Schaltung nach Fig. 3, bei der jeder Kapazitätsdiode eine Antiserienschaltung einer steuerbaren Kapazität parallel geschaltet ist, und

Fig. 6      eine Schaltung nach Fig. 3 mit den beiden in Fig. 4 und 5 gezeigten Weiterbildungen.

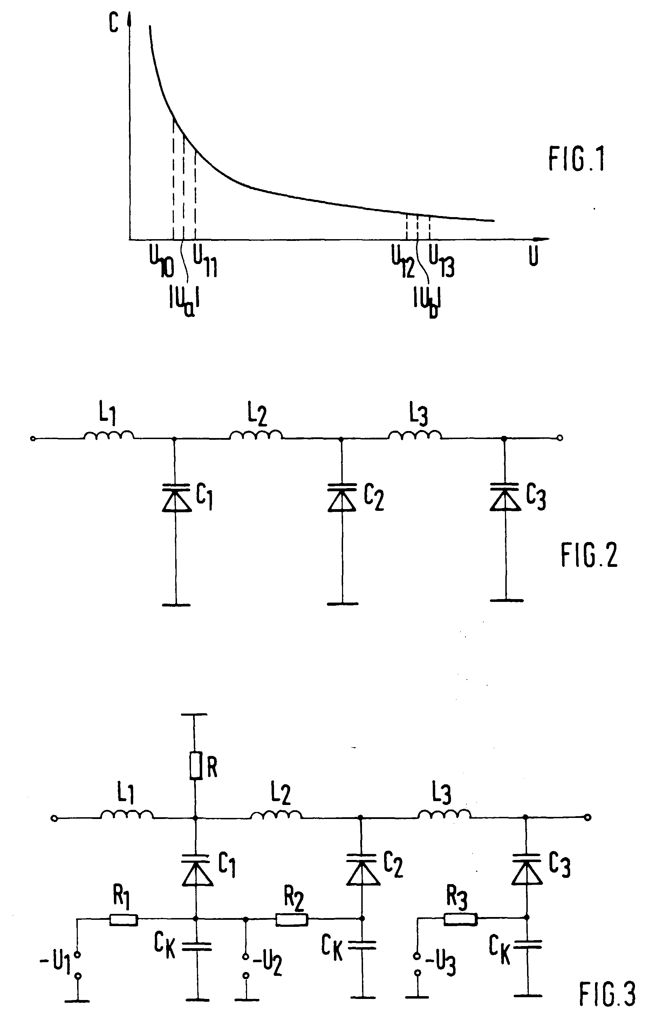

Anhand von Fig. 1 wird nun eingehend die Spannungsabhängigkeit der Kapazität einer Kapazitätsdiode und damit das mit der Erfindung gelöste Problem erläutert. Die Kurve der Fig. 1 zeigt qualitativ, wie die Kapazität der Kapazitätsdiode in Abhängigkeit von der an ihr liegenden Spannung U, die in Sperrichtung gepolt ist, verläuft. Mit zunehmender Sperrspannung U sinkt die Kapazität wie durch die Kurve qualitativ angegeben. Man sieht, daß sich C mit U stark ändert, je größer C und damit je kleiner U ist. Ist die Diode so vorgespannt, daß die an ihr liegende Spannung infolge der Signalspannung beispielsweise zwischen $U_{10}$ und $U_{11}$ variiert, so variiert C stark. Ist die Diode so vorgespannt, daß die an ihr liegende Spannung beispielsweise zwischen $U_{12}$ und $U_{13}$ variiert, so variiert ihre Kapazität dabei erheblich weniger.

Ist also wegen der bestehenden Verzerrungen es erforderlich, daß man die Diode im Bereich großer Steilheit der Kapazitäts-Spannungs-Kurve betreibt, so wirkt sie unvermeidbar mit großer Kapazität, was wie oben erwähnt die Grenzfrequenz des bekannten Entzerrers herabsetzt.

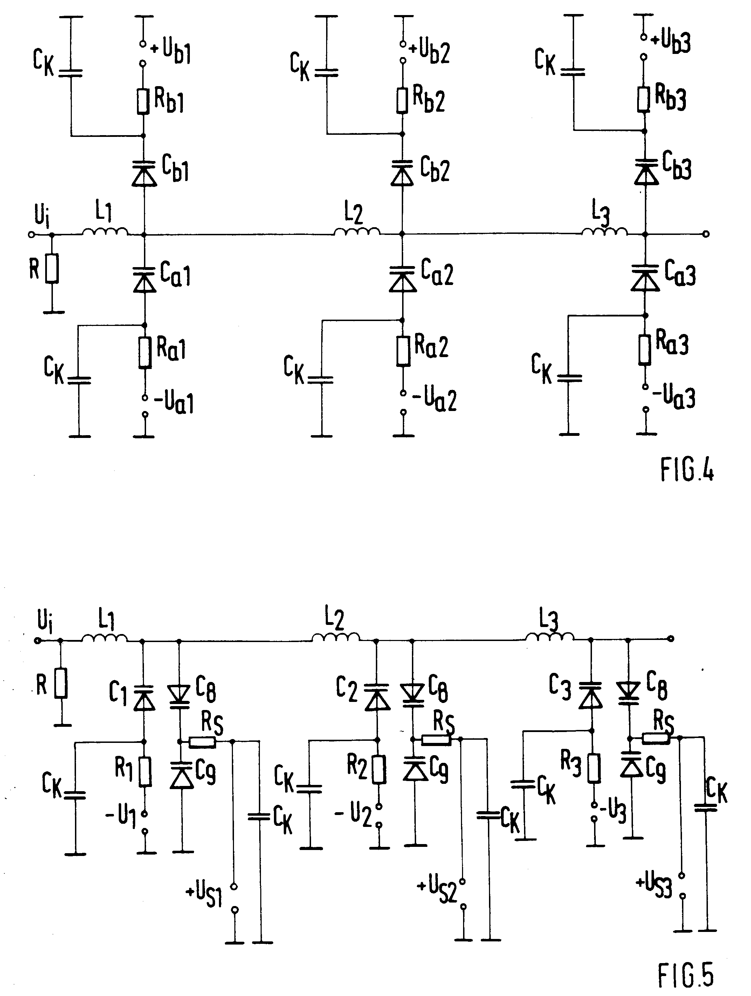

Die erfindungsgemäße Schaltung, die im Prinzip in Fig. 2 gezeigt ist, hat die Eigenschaft, daß sowohl die Forderung nach einer hohen Grenzfrequenz als auch die Forderung nach Entzerrung starker nichtlinearer Verzerrungen, wie sie beispielsweise bei längeren Lichtwellenleiter-Strecken auftreten, erfüllbar ist.

Die Lösung ist eine LC-Kettenschaltung, bei der wenigstens ein Teil der kapazitiven Elemente Kapazitätsdioden sind, die in Sperrichtung betrieben werden. In Fig. 2 ist ein Beispiel einer dreigliedrigen Kette mit Induktivtäten $L_1$, $L_2$ und $L_3$ und Kapazitätsdioden $C_1$, $C_2$ und $C_3$ gezeigt. Selbstverständlich sind Kettenschaltungen mit einer beliebigen Anzahl von LC-Gliedern der gezeigten Art prinzipiell geeignet und auch LC-Kettenschaltungen, deren kapazitive Elemente nicht nur durch Kapazitätsdioden gebildet sind. Beispielsweise kann die Kettenschaltung ein oder mehrere LC-Glieder enthalten, die wie der bekannte Entzerrer zusätzlich oder auch nur einen normalen Kondensator enthalten.

Die Kapazitätsioden können wie in Fig. 2 gezeigt oder dazu entgegengesetzt gepolt sein. Welche Polung die richtige ist, hängt, wie an späterer Stelle erläutert wird, von der bestehenden Signalverzerrung ab.

Bei einer Kettenschaltung, wie sie in Fig. 2 gezeigt ist, können die Induktivitäten und die Kapazitäten prinzipiell so gewählt werden, wie es der Wellenwiderstand der Leitung, in die die Schaltung einzufügen ist, und die Bandbreite der über die Leitung zu übertragenden Signale erfordern. Insbesondere ist es möglich, die Kapazitätsdioden so zu wählen und/oder durch geeignete Vorspannungen so zu betreiben, daß sie eine geringe Kapazität haben. Die Schaltungsteile zum Vorspannen der Kapazitätsdioden sind in Fig. 2 zur Vereinfachung weggelassen.

Die Entzerrung, die jedes einzelne LC-Glied für sich genommen bewirkt, ist dann zwar relativ gering. Z.B. ist es eine solche Entzerrung, wie sie sich ergibt, wenn die Kapazität gemäß der Kurve in Fig. 1 durch Spannungen zwischen $U_{12}$ und $U_{13}$ bestimmt wird. Trotzdem hat die gesamte LC-Kettenschaltung eine beträchtliche Entzerrungsfähigkeit, da sich die Entzerrungen, die die einzelnen Glieder für sich bewirken, zu einander addieren und somit die Gesamtheit der LC-Glieder eine hinreichende spannungsabhängige Verzögerung der Eingangssignale, also eine hinreichende Entzerrung der nichtlinear verzerrten Signale, bewirkt.

Da sich die Gesamtentzerrung der erfindungsgemäßen LC-Kettenschaltung aus Beiträgen der einzelnen LC-Glieder additiv zusammensetzt, können die einzelnen LC-Glieder so betrieben werden, daß ihre Kapazität relativ gering ist und auch bei der Einstellung der Entzerrung die anderen Schaltungsparameter nur wenig verändert. Dadurch bleibt ihr Einfluß auf die Frequenzabhängigkeit der Dämpfung, den sogenannten Frquenzgang, der gesamten LC-Kette relativ gering.

Ein weiterer Vorteil der erfindungsgemäßen LC-Kettenschaltung liegt darin, daß die Vorspannungen der einzelnen Kapazitätsdioden ungleich gewählt und unabhängig von einander verändert werden können. Damit sind soviele Freiheitsgrade wie Kapazitätsdioden gegeben, um den Entzerrer auf irgendeine bestehende Verzerrung einzustellen. Beispielsweise ist es möglich, eines oder mehrere der LC-Glieder mit einer so hohen Sperrspannung zu betreiben, daß es praktisch nichts zur Entzerrung beiträgt, und es erst bedarfsweise durch Verkleinern seiner Sperrspannung zur Entzerrung beitragen zu lassen.

In Fig. 3 ist dieselbe LC-Kettenschaltung wie in Fig. 2 dargestellt, jedoch zusammen mit den Schaltungsteilen zum Vorspannen der Kapazitätsdioden. Zum Vorspannen der Kapazitätsdiode $C_1$ dient ein Gleichstromkreis, der von Masse über einen Widerstand R, die Kapazitätsdiode $C_1$, einen Widerstand $R_1$ und eine Gleichspannungsquelle $U_1$, deren einer Pol an Masse liegt, führt. Durch geeignete Steuerung der Spannung der Spannungsquelle $U_1$ kann die bei fehlender Eingangsspannung an der Induktivität $L_1$ an der Kapazitätsdiode $C_1$ liegende Spannung, also die Vorspannung oder der Arbeitspunkt der Kapazitätsdiode, vorgegeben werden. Durch die Bezeichnung $-U_1$ an einem Pol der Spannungsquelle $U_1$ ist angedeutet, daß die mit diesem Pol verbundene Anode der Kapazitätsdiode $C_1$ auf tieferem Potential liegen muß als die über den Widerstand R mit Masse verbundene Kathode. Entsprechende Gleichstromkreise zur Vorspannung der Kapazitätsdioden $C_2$ und $C_3$ sind durch einen Widerstand $R_2$, eine Spannungsquelle $U_2$ bzw. durch einen Widerstand $R_3$ und eine Spannungsquelle $U_3$ dargestellt. Damit die Anoden der Kapazitätsdioden $C_1$ bis $C_3$ wechselspannungsmäßig an Masse angekoppelt sind, sind zwischen ihnen und Masse Kondensatoren $C_k$ geschaltet.

Selbstverständlich ist es auch möglich, daß die Kathoden mit einer einzigen Spannungsquelle verbunden sind, entweder über unterschiedliche Widerstände $R_1$ bis $R_3$ oder über einen einzigen Widerstand, z.B. über den Widerstand $R_1$ mit der in diesem Falle gemeinsamen Spannungsquelle $U_1$.

Im folgenden wird ein Problem und seine erfindungsgemäße Lösung betrachtet, das für das bekannte LC-Glied ebenso besteht wie für jedes der LC-Glieder der oben beschriebenen LC-Kettenschaltung. Daher wird nur ein LC-Glied betrachtet.

Für das bekannte LC-Glied und damit auch für die oben beschriebene LC-Kettenschaltung hat sich gezeigt, daß die Eigenschaft des LC-Gliedes, Signale zu entzerren, nur bei einer der zwei möglichen Polungen der Kapazitätsdiode gegeben ist. Ob die gewünschte Entzerrung bewirkt wird oder nicht, hängt also davon ab, ob die Kapazitätsdiode mit ihrer Kathode oder mit ihrer Anode an die Eingangsleitung angeschlossen ist.

Welche Polung die richtige ist, kann nicht vorhergesehen werden, da es bei praktisch zu realisierenden Nachrichtenübertragungssystemen möglich ist, daß in der Übertragungsstrecke zwischen dem sendeseitigen Laser und dem Ort des Entzerrers es zu Polaritätsumkehrungen des Signals, z.B. durch invertierende Verstärker, kommen kann, die dem Betreiber und Installierer des Nachrichtenübertragungssystems nicht bekannt sind, weil sie abgesehen von der hier interessierenden nichtlinearen Signalverzerrung keinerlei Rolle spielen. Bei der Einrichtung einer Übertragungsstrecke mit einem solchen Entzerrer ist es aus praktischen Gründen unerwünscht, daß die geeignete der beiden möglichen Polungen der Kapazitätsdiode durch einen Versuch herausgefunden werden muß. Wünschenswert wäre es vielmehr, eine in allen Fällen funktionierende Entzerrerschaltung zu haben.

Die Lösung besteht darin, wie in Fig. 4 gezeigt, jeder Kapazitätsdiode eines LC-Gliedes (Fig. 3) eine weitere Kapazitätsdiode, die ebenfalls in Sperrichtung vorgespannt ist, entgegengesetzt gepolt parallel zu schalten. Jedes der LC-Glieder des Entzerrers nach Fig. 4 hat eine Induktivität L und eine erste Kapazitätsdiode $C_a$, die mit ihrer Kathode an die Induktivität L angeschlossen ist und an einer in Sperrichtung gepolten Vorspannung liegt. Insoweit entspricht es dem in der eingangs genannten Druckschrift (Fig. 4b) gezeigten Entzerrer. Zur Vorspannung der Kapazitätsdiode dient ein Gleichstromkreis, der von Masse über einen Widerstand R, die Induktivität L, die Kathode der Kapazitätsdiode $C_a$, ihre Anode und einen Widerstand $R_a$ zum negativen Pol einer Gleichspannungquelle $U_a$ führt, deren anderer Pol an Masse liegt. (Die Indices, die angeben, ob ein Element zum 1., 2. oder 3. LC-Glied gehört, sind weggelassen, da nur eines der LC-Glieder betrachtet wird.)

Bei dieser Polung der Kapazitätsdiode erhöht sich die an ihr liegende Sperrspannung mit positiven Eingangsspannungen $U_i$, und damit verringert sich ihre Kapazität, so daß positivere Spannungen den Entzerrer schneller durchlaufen als weniger positive. Damit bewirkt die Kapazitätsdiode $C_a$ aber nur dann eine Entzerrung, wenn die bis zu ihm bestehende Übertragungsstrecke die Eigenschaft hat, daß sie positivere Spannungen stärker verzögert als weniger positive Spannungen. Ob dies der Fall ist, hängt von der Anzahl der invertierenden Verstärker, die in die Strecke eingefügt sind, ab und kann daher nie mit Sicherheit vorhergesagt werden. Wenn die Voraussetzung nicht zutrifft, so verstärkt der Entzerrer die bestehende Entzerrung, anstatt ihr entgegenzuwirken.

Zur Lösung des geschilderten Problems ist, wie Fig. 4 zeigt, eine zweite Kapazitätsdiode $C_b$ vorhanden, die antiparallel zur ersten Kapazitätsdiode $C_a$ angeordnet ist. Während $C_a$ mit ihrer Kathode an die Induktivität L angeschlossen ist, ist $C_b$ mit ihrer Anode an L angeschlossen. Um sie ebenfalls in Sperrichtung vorzuspannen, ist eine Spannungsquelle $U_b$ vorhanden, die zusammen mit dem Widerstand R und einem Widerstand $R_b$ einen Gleichstromkreis für die Kapazitätsdiode $C_b$ bildet. Der positive Pol der Spannungsquelle $U_b$ ist mit der Kathode der Kapazitätsdiode $C_b$ verbunden, so daß sie in Sperrichtung vorgespannt ist. Beide Kapazitätsdioden liegen mit ihren der Induktivität L abgewandten Anschlüssen über Kondensatoren $C_K$ wechselspannungsmäßig an Masse.

Wie bei dem bekannten Entzerrer kann außer der Kapazität der Kapazitätsdioden auch die Kapazität eines normalen Kondensators vorhanden sein.

Der neue Entzerrer nach Fig. 4 hat die Eigenschaft, daß, gleichgültig, mit welcher Polarität das Eingangssignal verzerrt ist, eine der beiden Kapazitätsdioden jedes der LC-Glieder der Entzerrung entgegenwirkt und die andere die Entzerrung verstärkt. In welchem Maße sie dies tun, hängt vom Betrag der an ihnen liegenden, in Sperrichtung gepolten Vorspannung ab.

Anhand von Fig. 1 wird nun erläutert, daß man durch Einstellung der Beträge der beiden Vorspannungen dafür sorgen kann, daß eine der beiden Kapazitätsdioden die gewünschte Entzerrungsfunktion ausübt und die andere hinsichtlich Verzerrung oder Entzerrung nahezu unwirksam ist. Die Kurve der Fig. 1 zeigt schematisch und nur qualitativ, wie die Kapazität einer Kapazitätsdiode von der an ihr in Sperrichtung bestehenden Spannung abhängt. Man sieht, daß die Kapazität mit zunehmender Sperrspannung abnimmt, und daß auch die Steilheit, mit der die Kapazität abnimmt, mit zunehmender Sperrspannung abnimmt. Folglich muß man eine Diode mit geringer Sperrspannung betreiben, wenn man will, daß sich ihre Kapazität mit der an ihr bestehenden Spannung stark ändert, und man muß sie mit hoher Sperrspannung betreiben, wenn man will, daß sich ihre Kapazität mit der Spannung nur wenig ändert. Wählt man also in der Schaltung nach Fig. 4 beispielsweise die Vorspannung $-U_a$ an der Kapazitätsdiode $C_a$ so, daß ihr Betrag gering ist, so wählt man dadurch einen Arbeitspunkt für diese Kapazitätsdiode, bei dem, wie Fig. 1 zeigt, die Kapazität stark spannungsabhängig ist. Wählt man gleichzeitig die Vorspannung $+U_b$ an der Kapazitätsdiode $C_b$ so, daß sie einen hohen Betrag hat, so wählt man dadurch einen Arbeitspunkt, bei dem, wie Fig. 1 zeigt, die Kapazität nur wenig von der Spannung abhängt. In diesem Falle hat $C_a$, je nachdem wie die Verzerrung der Eingangsignale von deren Polarität abhängt, eine stark entzerrende Wirkung oder eine stark verzerrende Wirkung, und $C_b$ eine schwach verzerrende oder eine schwach entzerrende Wirkung. Umgekehrt kann man durch eine hohe betragsmäßige Vorspannung an $C_a$ und eine kleine betragsmäßige Vorspannung an $C_b$ die erstere in den Zustand der schwachen und die letztere in den Zustand der starken Spannungsabhängigkeit bringen.

Im praktischen Einsatzfall des neuen Entzerrers kann man wie folgt herausfinden, ob durch eine hohe betragsmäßige Vorspannung an $C_a$ und eine niedrige betragsmäßige Vorspannung an $C_b$ oder umgekehrt sich die gewünschte Entzerrungsfunktion ergibt.

Das Kriterium für die Einstellung der Entzerrung durch Einstellung der Vorspannungen $U_a$ und $U_b$ ist die nichtlineare Signalverzerrung, die das zu übertragende Signal aufgrund des "Laser-Chirp" und der chromatischen Dispersion des die Übertragungsstrecke bildenden Lichtwellenleiters bis zum optischen Empfänger erfährt. Diese nichtlineare Signalverzerrung äußert sich in einem Beitrag zu unerwünschten Signalanteilen im Ausgangssignal des optischen Empfängers und des diesem gegebenenfalls nachgeschalteten elektrischen Verstärkers. Von den unverwünschten Signalanteilen sind besonders die Klirrprodukte zweiter Ordnung störend (englisch: composite second order distortion). Es sind dies Schwingungen mit Frequenzen, wie sie im übertragenen Signal nicht vorkommen, nämlich Schwingungen mit Frequenzen, die Summen und Differenzfrequenzen von jenen Schwingungen sind, aus denen das Eingangssignal des Lasers der Übertragungsstrecke zusammengesetzt ist.

Um ein Maß für die entstehenden Klirrprodukte zu haben, kann man dem Eingangssignal des Lasers ein sogenanntes Pilotsignal mit einer bestimmten Frequenz, d.h. eine unmodulierte Schwingung, hinzufügen und empfangsseitig die daraus entstehenden Klirrprodukte zweiter Ordnung, nämlich Schwingungen mit der doppelten Frequenz hinsichtlich ihres Pegels messen. Man kann aber auch zwei solcher Pilotsignale hinzufügen und empfangsseitig die aus ihnen entstandene Schwingung mit der Summenfrequenz hinsichtlich ihres Pegels messen. In jedem Fall werrden Klirrprodukte zweiter Ordnung als Maß für die nichtlinearen Verzerrungen der übetragenen Singale gemessen.

Ziel der Entzerrung ist es, die Klirrprodukte zweiter Ordnung soweit wie möglich zu unterdrücken. Das relative Maß der Unterdrückung der Klirrprodukte zweiter Ordnung ist also ein Maß für die Wirksamkeit der Entzerrung.

Die Vorspannungen der beiden Kapazitätsdioden $C_a$ und $C_b$ werden nun wie folgt in Abhängigkeit von dem am Ausgang des Entzerrers gemessenen Klirrfaktor zweiter Ordnung des Pilotsignals eingestellt. Zunächst werden beide Vorspannungen betragsmäßig auf ihren Maximalwert eingestellt. Gemäß Fig. 1 haben sie bei maximaler Vorspannung keine wesentliche Wirkung auf die Verzerrung des Signals. Dann wird eine der beiden Vorspannungen betragsmäßig verkleinert und die Änderung des gemessenen Klirrfaktors beobachtet. Wird beispielsweise $U_a$ betragsmäßig verkleinert und vergrößert sich dadurch der Klirrfaktor, so ist klar, daß $C_a$ nicht die Kapazitätsdiode ist, die bei kleiner Sperrspannung für die gewünschte Entzerrung sorgen kann. $U_a$ wird also wieder auf den Maximalwert von z.B. 30 V erhöht. Daraufhin wird mittels der Vorspannung $U_b$ eine optimale Entzerrung eingestellt, was dadurch geschieht, daß $U_b$ betragsmäßig verkleinert wird und dabei sich auch der gemessene Klirrfaktor verringert, solange, bis der Klirrfaktor beginnt, wieder größer zu werden, d.h. sein Minimum erreicht hat.

Die beschriebene Einstellung der Vorspannungen der beiden Kapazitätsdioden kann entweder von Hand in Abhängigkeit von einer Anzeige eines den Klirrfaktor messenden Meßgeräts vorgenommen werden, oder diese Spannungen können durch eine automatische Regelschaltung durchgeführt werden, die aus einem solchen Meßgerät und einem Regler besteht, der abhängig von dem gemessenen Wert die Vorspannungen steuert. Eine automatische Regelung ist zu bevorzugen, da sich dadurch der erfindungsgemäße Entzerrer automatisch auf jede beliebige optische Übertragungsstrecke einstellt und sich auch auf jegliche Veränderungen, die eine Übertragungsstrecke durch Wartung, Instandsetzung und jeglichen Veränderungen im Übertragungsnetz, die die Polarität der Empfangssignale am Ende einer Übertragungsstrecke invertieren, einstellen kann. Auch nach erfolgter Optimierung kann sich während des Betriebs ein Reglungsbedarf ergeben, beispielsweise bei Temperaturschwankungen oder aufgrund von Alterungen von Bauelementen und sonstigen Veränderungen.

Die vorstehende Beschreibung zeigt, daß je nach Vorspannung der Dioden $C_a$ und der Dioden $C_b$ die LC-Kettenschaltung entweder mit den Kapazitäten der Dioden $C_a$ ("unterer Teil") oder mit den Kapazitäten der Dioden $C_b$ ("oberer Teil") als Entzerrer wirkt.

Im vorstehenden Beschreibungsteil wurde - gleichgültig, ob ein LC-Glied nur eine Kapazitätsdiode (wie in Fig. 2) oder zwei Kapazitätsdioden (wie in Fig. 3) hat - der Fall betrachtet, daß die entzerrende Kapazitätsdiode so vorgespannt wird, daß sie die erforderliche Entzerrung leistet, d.h. bei einem Arbeitspunkt betrieben wird, an dem ihre C-U-Kurve (Fig. 1) die erforderliche Steilheit hat. Während des Betriebs eines solchen Entzerrers kann es nun vorkommen, daß sich die erforderliche Entzerrung verringert, sei es dadurch, daß der für die Verzerrung primär verantwortliche Laser der Übertragungsstrecke durch einen besseren ersetzt wird oder daß der Entzerrer an eine Lichtwellenleiterstrecke mit geringerer Wellenleiterdispersion oder eine Lichtwellenleiterstrecke mit geringerer Länge angeschlossen wird.

Dann muß die Sperrspannung betragsmäßig vergrößert werden, damit der Entzerrer bei einem Arbeitspunkt mit geringerer Steilheit der C-U-Kurve betrieben und die Entzerrung dadurch den geänderten Verhältnissen angepaßt wird. Eine solche Anpassung verringert, wie Fig. 1 zeigt, unvermeidbar die Kapazität der die Entzerrung bewirkenden Kapazitätsdiode, was wiederum den Wellenwiderstand der Leitung und damit die Dämpfung der zu übertragenden Signale in ihrer Frequenzabhängigkeit verändern kann. Es kann also vorkommen, daß man durch die genannte Anpassung zwar die Entzerrung optimiert, jedoch gleichzeitig dadurch die Frequenzabhängigkeit der Dämpfung des Entzerrers, den sogenannten Frequenzgang, verschlechtert.

Daher wäre es wünschenswert, eine zu Entzerrungszwecken vorgenommene Verringerung der Kapazität des LC-Gliedes ausgleichen zu können.

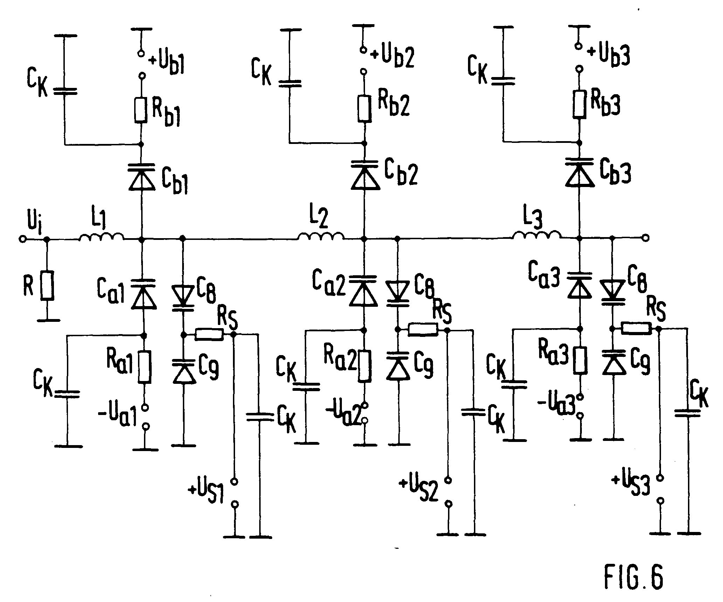

Anhand von Fig. 5 wird eine Weiterbildung der bisher beschriebenen Erfindung erläutert, die die Möglichkeit schafft, die genannte Kapazitätsverringerung auszugleichen. Der linke Teil jedes der LC-Glieder stimmt genau mit jedem der LC-Glieder des Entzerrers nach Fig. 2 überein und bedarf daher keiner nochmaligen Erläuterung. Der rechte Teil zeigt eine Antiserienschaltung zweier Kapazitätsdioden $C_8$ und $C_9$, die der Kapazität des bisher erläuterten LC-Gliedes parallel geschaltet ist. Eine steuerbare Spannungsquelle $U_s$, deren einer Pol mit Masse verbunden und deren anderer, gegenüber Masse positiver Pol, über einen Widerstand $R_S$ mit dem Verbindungspunkt der Anoden der beiden Kapazitätsdioden verbunden ist, dient dazu, beide Kapazitätsdioden $C_8$ und $C_9$ in Sperrichtung vorzuspannen. Um hochfrequente Schwingungen von der Spannungsquelle $U_s$ abzublocken, ist ein Kondensator $C_K$ der Spannungsquelle gegen Masse parallel geschaltet.

Dieselbe Antiserienschaltung ist in Fig. 6 zu jedem der LC-Glieder, wie sie in Fig. 4 gezeigt sind, ergänzt. Sie ist dort jeder der beiden Kapazitätsdioden $C_a$ und $C_b$ eines LC-Gliedes parallel geschaltet.

Der Entzerrer nach Fig. 5 oder Fig. 6 hat, wie später erläutert wird, den Vorteil, daß die Gesamtkapazität $C_g$ der Antiserienschaltung der beiden Kapazitätsdioden $C_8$ und $C_9$ zwar von der Vorspannung $U_s$ abhängt und damit über diese gesteuert werden kann, jedoch andererseits jedenfalls in erster Näherung nicht von der Signalspannung $U_i$ abhängt und damit keinen Einfluß auf die Verzerrung oder Entzerrung des Signals hat. Auf diese Weise ist der Kapazität C bei Fig. 5 bzw. der Parallelschaltung aus den Kapazitäten $C_a$ und $C_b$ bei Fig. 6 eine einstellbare Kapazität parallel geschaltet, mit der eine im Zusammenhang mit der erforderlichen Signalentzerrung unvermeidbar erfolgte Änderung der Kapazität von C bzw. von $C_a$ oder $C_b$ kompensiert werden kann.

Da die steuerbare Kapazität der Antiserienschaltung von $C_8$ und $C_9$ die Möglichkeit bietet, die auf optimale Entzerrung eingestellte Kapazität der Kapazitätsdiode C bzw. $C_a$ oder $C_b$ zu einer Gesamtkapazität des LC-Gliedes zu ergänzen, die den gewünschten Frequenzgang des LC-Gliedes gewährleistet, ist es auch möglich, daß man als Ausgangs-Arbeitspunkt zunächst C bzw. $C_a$ oder $C_b$ auf eine mittlere Entzerrung einstellt und die Gesamtkapazität des LC-Gliedes durch geeignete Wahl der Steuerspannung $U_S$ im Hinblick auf einen optimalen Frequenzgang einstellt. Ist es ausgehend von einem solchen Arbeitspunkt erforderlich, die Entzerrung zu vergrößern, also die Kapazität von C bzw. $C_a$ oder $C_b$ zu erhöhen, so kann dies durch eine entsprechende Verkleinerung der Kapazität der Antiserienschaltung von $C_8$ und $C_9$ durch Änderung der Steuerspannung $U_S$ ausgeglichen werden.

Im allgemeinen ist also die Serienschaltung von $C_8$ und $C_9$ eine steuerbare Kapazität, die dazu dient, jegliche Änderungen, die zur Optimierung der Entzerrung erforderlich sind, im Hinblick auf die Gesamtkapazität des LC-Gliedes auszugleichen, so daß trotz der Änderungen von C bzw. $C_a$ oder $C_b$ der Frequenzgang des LC-Gliedes konstant gehalten werden kann.

Im folgenden wird erläutert, warum die Gesamtkapazität der Serienschaltung im wesentlichen nur von der Steuerspannung $U_S$ und nicht von der Signalspannung $U_i$ abhängt. Solange die Signalspannung $U_i$ gleich 0 ist, liegt zwischen der Kathode und der Anode von $C_8$ die Steuerspannung $U_S$ und ebenso zwischen der Kathode und der Anode von $C_9$ (Ein Gleichstrom über $R_s$ fließt nicht.). Die Kapazitätsdioden $C_8$ und $C_9$ seien gleich, und die durch die Steuerspannung $U_S$ an ihnen eingestellte Kapazität sei jeweils mit $C_0$ bezeichnet. Eine Signalspannung $U_i$ ergibt zwischen der Anode und der Kathode von $C_8$ eine Spannung $U_{C8} = U_S - 1/2 \, U_i$ und zwischen der Kathode und der Anode von $C_9$ eine Spannung $U_{C9} = U_S + 1/2 \, U_i$, da die Spannung $U_i$ zur Hälfte an $C_8$ und zur Hälfte an $C_9$ abfällt. In anderen Worten: eine Änderung der Signalspannung von 0 auf $U_i$ erniedrigt die an $C_8$ bestehende Sperrspannung von $U_s$ um $1/2 \, U_i$ und erhöht die an $C_9$ bestehende Sperrspannung von $U_S$ um $1/2 \, U_i$. Dadurch erhöht sich Kapazität von $C_8$ auf $C_8 = C_0 + \Delta C$ und vermindert sich die Kapazität von $C_9$ auf $C_9 = C_0 - \Delta C$, wobei $\Delta C$ einen geringen Wert darstellt. Die Gesamtkapazität der Serienschaltung beträgt somit

$$Cg = \frac{C_8 \cdot C_9}{C_8 + C_9} = \frac{C_0^{\;2} - \Delta C^2}{2 C_0} \simeq \frac{C_0}{2},$$

da $\Delta C^2$ wegen des kleinen Werts von $\Delta C$ vernachlässigt werden kann. Da $C_0$, wie oben gesagt, nur durch $U_S$ bestimmt wird, ist also die Gesamtkapazität, jedenfalls in erster Näherung, nur von $U_S$ und nicht von der Signalspannung $U_i$ abhängig.

Als Alternative zur Schaltung nach Fig. 6 erscheint es möglich, auf die Antiserienschaltung von $C_8$ und $C_9$ zu verzichten, d.h. einen Entzerrer nach Fig. 4 zu verwenden, und die Änderung der Kapazität der einen Kapazitätsdiode $C_a$ durch eine Änderung der Kapazität von $C_b$ auszugleichen, d.h. $U_b$ nicht auf dem Maximalwert zu belassen, sondern so nachzuregeln, daß bei einer zur Optimierung der durch $C_a$ bewirkten Entzerrung vorgenommenen Änderung der Vorspannung $U_a$ der

Wellenwiderstand des LC-Gliedes und damit dessen Frequenzgang unbeeinflußt bleibt.

Aus dem Vorstehenden ist ersichtlich, daß die erfindungsgemäße Schaltung verschiedene Möglichkeiten bietet, die Vorspannungen $U_a$ und $U_b$ und gegebenenfalls die Steuerspannung $U_S$ einzustellen.

Das Kriterium für die Einstellung des Frequenzgangs des Entzerrers ist der Dämpfungsunterschied, der bei der Übertragung unterschiedlicher Frequenzen über die gesamte Übertragungsstrecke am Ausgang des Entzerrers gemessen werden kann. Man mißt ihn vorzugsweise, indem man sendeseitig zwei Pilotsignale unterschiedlicher Frequenzen mit konstanten Pegeln dem zu übertragenden elektrischen Signalgemisch hinzufügt und am Ausgang des empfangsseitigen Entzerrers den Pegelunterschied der beiden Pilotsignale mißt, der im Idealfall gleich einem Sollwert sein sollte.

Das Kriterium für die Einstellung der Entzerrung des Entzerrers ist der oben erläuterte Klirrfaktor zweiter Ordnung. Mißt man diesen Klirrfaktor mit einem Klirrdetektor und den Pegelunterschied zweier Pilotsignale unterschiedlicher Frequenzen mit einem sogenannten Frequenzgang-Meßgerät, so kann man von Hand die Einstellung der Entzerrung und gegebenenfalls des Frequenzgangs des Entzerrers wie oben erläutert vornehmen.

Andererseits kann der Entzerrer durch Vorsehen einer Regelschaltung zu einer automatischen Entzerrer-Schaltungsanordnung erweitert werden.

Hierzu ergeben sich aufgrund der oben erläuterten Einstellmöglichkeiten und meßbaren Kriterien zur Einstellung folgende Möglichkeiten:

a) Die Schaltungsanordnung enthält einen Entzerrer nach Fig. 4. An seinen Ausgang ist ein die Klirrprodukte zweiter Ordnung, die aus einem oder mehreren Pilotsignale entstanden sind, messender Klirrdetektor angeschlossen, dessen Ausgangssignal in einen Regler eingegeben wird, der den gemessenen Klirrprodukten entsprechend die Vorspannungen $U_a$ und $U_b$ einstellt, derart, daß die eine der beiden Dioden praktisch die Entzerrung durchführt und die andere bei maximaler betragsmäßiger Vorspannung betrieben wird und damit zur Entzerrung oder Verzerrung praktisch nicht beiträgt.

b) Der Entzerrer ist ebenfalls einer nach Fig. 4. An seinen Ausgang ist ein die Klirrprodukte zweiter Ordnung, die aus einem oder mehreren Pilotsingale entstanden sind, messender Klirrdetektor und eine Frequenzgang-Meßeinrichtung angeschlossen. Beide Ausgangssignale werden in einen Regler eingegeben, der wie oben beschrieben sowohl die erforderliche Entzerrung durch im wesentlichen eine der beiden Dioden regelt als auch die den Frequenzgang des Entzerrers durch die andere der beiden Dioden konstant hält.

c) Die Schaltungsanordnung enthält als Entzerrer einen nach Fig. 6, und die Regelschaltung besteht aus einem an dem Entzerrerausgang angeschlossenen Klirrdetektor zur Messung der Klirrprodukte zweiter Ordnung, die aus einem oder mehreren Pilotsignalenentstanden sind, und einer Frequenzgang-Meßeinrichtung wie oben beschrieben. Beide Ausgangssignale werden in einen Regler eingegeben werden, der daraus die Stellgrößen zur Einstellung der Vorspannungen $U_a$, $U_b$ und $U_S$ bildet und damit sowohl die Entzerrung regelt als auch dabei den Frequenzgang konstant hält.

d) Die Schaltungsanordnung enthält einen Entzerrer nach Fig. 5. An den Ausgang dieses Entzerrers sind ein Klirrdetektor zur Messung der Klirrprodukte zweiter Ordnung, die aus einem oder mehreren Pilotsignalen entstanden sind, und eine Frequenzgang-Meßeinrichtung zum Messen des Frequenzgangs angeschlossen, deren Ausgangssignale in einen Regler eingegeben werden, der Stellgrößen zum Einstellen der Vorspannung der zum Entzerren dienenden Kapazitätsdiode und zum Konstanthalten des Frequenzgangs bei dieser Entzerrung bildet.

Da nicht nur der "Laser-Chirp" in Verbindung mit der chromatischen Dispersion des Lichtwellenleiters Klirrprodukte zweiter Ordnung verursacht, sondern auch die im Hinblick auf die im Laser stattfindende Intensitätsmodulation im Laser selbst bestehende Nichtlinearität, erscheint es für die vorstehend beschriebene empfangsseitige Entzerrung nützlich, beim Laser einen Vorentzerrer zur Kompensation der Laser-Nichtlinearität zu verwenden, vorzugsweise einen geregelten Vorentzerrer z.B. einen der aus der DE-A1 33 07 309 bekannten Art.

**Patentansprüche**

1.  Schaltungsanordnung zum Entzerren von nichtlinear verzerrten über optische Nachrichtenübertragungssysteme übertragenen Signalen, die aus einer LC-Kettenschaltung ( $L_1$, $C_1$, $L_2$, $C_2$, $L_3$, $C_3$ ) besteht,
    **dadurch gekennzeichnet**, daß die LC-Kettenschalfung ( $L_1$, $C_1$, $L_2$, $C_2$, $L_3$, $C_3$ ) Induktivitäten ( $L_1$, $L_2$, $L_3$ ) in den Längszweigen und in Sperrichtung vorgespannte Kapazitätsdioden ($C_1$, $C_2$, $C_3$) in den Querzweigen, oder umgekehrt, enthält.

2.  Schaltungsanordnung nach Anspruch 1, dadurch gekennzeichnet, daß sämtliche Kapazitätsdioden mit einer einzigen ihre Vorspannung bestimmenden Gleichspannungsquelle verbunden sind.

3.  Schaltungsanordnung nach Anspruch 1, dadurch gekennzeichnet, daß die Kapazitätsdioden ($C_1$ bis $C_3$) mit unterschiedlichen Gleichspannungsquellen ($U_1$, $U_2$, $U_3$) verbunden sind, die ihre Vorspannung bestimmen.

4. Schaltungsanordnung nach einem der Ansprüche 1 bis 3, dadurch gekennzeichnet, daß der Kapazitätsdiode ($C_a$) jedes Gliedes der LC-Kettenschaltung eine weitere Kapazitätsdiode ($C_b$) mit entgegengesetzter Polung parallel geschaltet ist und ebenfalls in Sperrichtung vorgespannt ist, und daß die beiden Vorspannungen ($U_a$, $U_b$) derart einstellbar sind, daß entweder im wesentlichen nur die eine Kapazitätsdiode ($C_a$) oder im wesentlichen nur die andere Kapazitätsdiode ($C_b$) eine mit der anliegenden Signalspannung ($U_i$) variierende Kapazität hat (Fig. 4).

5. Schaltungsanordnung nach einem der Ansprüche 1 bis 4, dadurch gekennzeichnet, daß der Kapazität jedes LC-Gliedes der LC-Kettenschaltung eine Antiserien-Schaltung zweier weiterer Kapazitätsdioden ($C_8$, $C_9$) parallel geschaltet ist, deren Gesamtkapazität durch eine einstellbare Vorspannung ($U_S$) bestimmt ist (Fig. 5 oder Fig. 6).

6. Schaltungsanordnung nach Anspruch 4 oder 5 mit dessen Rückbeziehung auf Anspruch 4, dadurch gekennzeichnet, daß sie eine Regelschaltung hat, die enthält:

- eine Einrichtung, die am Ausgang der LC-Kettenschaltung die aus einem oder mehreren Pilotsignalen entstandenen Klirrprodukte zweiter Ordnung als Maß für die nichtlineare Verzerrung der übertragenen Signale mißt und

- einen Regler, der aufgrund der gemessenen Klirrprodukte die Vorspannung ($U_a$) der einen Kapazitätsdiode ($C_a$) im Hinblick auf eine maximale Reduzierung der gemessenen Klirrprodukte einstellt und die Vorspannung ($U_b$) der anderen Kapazitätsdiode ($C_b$) auf einen konstanten, maximalen Wert einstellt.

7. Schaltungsanordnung nach Anspruch 4, dadurch gekennzeichnet, daß sie eine Regelschaltung hat, die enthält:

- eine Einrichtung, die am Ausgang der LC-Kettenschaltung die aus einem oder mehreren Pilotsignalen entstandenen Klirrprodukte zweiter Ordnung als Maß für die nichtlineare Verzerrung der übertragenen Signale mißt,

- eine Frequenzgang-Meßeinrichtung, die am Ausgang der LC-Kettenschaltung den Pegelunterschied zweier Pilotsignale als Maß für die Frequenzabhängigkeit der Dämpfung der LC-Kettenschaltung mißt, und

- einen Regler, der aufgrund der gemessenen Klirrprodukte die Vorspannung $U_a$ der einen Kapazitätsdiode ($C_a$) im Hinblick auf eine maximale Reduzierung der gemessenen Klirrprodukte einstellt und bei dieser Einstellung, falls erforderlich, durch Variation der Vorspannung ($U_b$) der anderen Kapazitätsdiode ($C_b$) den gemessenen Pegelunterschied der beiden Pilotsignale konstant hält.

8. Schaltungsanordnung nach Anspruch 5, dadurch gekennzeichnet, daß sie eine Regelschaltung hat, die enthält:

- eine Einrichtung, die am Ausgang der LC-Kettenschaltung die aus einem oder mehreren Pilotsignale entstandenen Klirrprodukte zweiter Ordnung als Maß für die nichtlineare Verzerrung der übertragenen Signale mißt,

- eine Frequenzgang-Meßeinrichtung, die am Ausgang der LC-Kettenschaltung den Pegelunterschied zweier Pilotsignale als Maß für die Frequenzabhängigkeit der Dämpfung der übertragenen Signale mißt, und

- einen Regler, der aufgrund der gemessenen Klirrprodukte die Vorspannung ($U_a$) der einen Kapazitätsdiode ($C_a$) im Hinblick auf eine maximale Reduzierung der gemessenen Klirrprodukte einstellt und die Vorspannung ($U_b$) der anderen Kapazitätsdiode ($C_b$) auf einen konstanten, maximalen Wert einstellt und aufgrund des gemessenen Pegelunterschieds der Pilotsignale die die Gesamtkapazität der Antiserien-Schaltung der beiden Kapazitätsdioden ($C_8$, $C_9$) bestimmende Vorspannung ($U_S$) derart einstellt, daß der Pegelunterschied der beiden Pilotsignale weitgehend unabhängig bleibt von der im Hinblick auf eine maximale Entzerrung erfolgenden Einstellung der Vorspannung ($U_a$) der einen Kapazitätsdiode ($C_a$).

9. Schaltungsanordnung nach Anspruch 5 ohne dessen Rückbeziehung auf Anspruch 4, dadurch gekennzeichnet, daß sie eine Regelschaltung hat, die enthält:

- eine Einrichtung, die am Ausgang der LC-Kettenschaltung die aus einem oder mehreren Pilotsignalen entstandenen Klirrprodukte zweiter Ordnung als Maß für die nichtlineare Verzerrung der übertragenen Signale mißt,

- eine Frequenzgang-Meßeinrichtung, die am Ausgang der LC-Kettenschaltung den Pegelunterschied zweier Pilotsignale als Maß für die Frequenzabhängigkeit der Dämpfung der übertragenen Signale mißt, und

- einen Regler, der aufgrund der gemessenen Klirrprodukte die Vorspannung der Kapazitätsdiode im Hinblick auf eine maximale Reduzierung der gemessenen Klirrprodukte einstellt und aufgrund des gemessenen Pegelunterschieds der Pilotsignale die die Gesamtkapazität der Antiserien-Schaltung der beiden Kapazitätsdioden bestimmende Vorspannung derart einstellt, daß der Pegelunterschied der beiden Pilotsignale weitgehend unabhängig bleibt von der im Hinblick auf eine maximale Entzerrung erfolgenden Einstellung der Vorspannung der Kapazitätsdiode.

## Revendications

1. Montage pour corriger les distorsions de signaux affectés de distorsions non linéaires, qui sont transmis par l'intermédiaire de système de transmission optique d'informations, et qui est constitué par un circuit itératif LC ($L_1,C_1,L_2,C_2,L_3,C_3$), caractérisé en ce que le circuit itératif LC ($L_1,C_1,L_2, C_2,L_3,C_3$) contient des inductances ($L_1,L_2,L_3$) situées dans les branches longitudinales et des diodes capacitives ($C_1,C_2,C_3$) polarisées en inverse, situées dans les branches transversales, ou inversement.

2. Montage selon la revendication 1 caractérisé en ce que toutes les diodes capacitives sont reliées à une seule source de tension continue, qui détermine sa tension de polarisation.

3. Montage selon la revendication 1, caractérisé en ce que les diodes capacitives ($C_1$ à $C_3$) sont reliées à différentes sources de tension continue ($U_1,U_2,U_3$), qui déterminent leur tension de polarisation.

4. Montage selon la revendication 1 à 3, caractérisé en ce qu'en parallèle avec la diode capacitive ($C_a$) de chaque élément du circuit itératif LC est branchée une autre diode capacitive possédant une polarité opposée et qui est également polarisée en inverse, et que les deux tensions de polarisation ($U_a; U_b$) sont réglables de telle sorte que soit essentiellement seule une diode capacitive ($C_a$) ou essentiellement seule l'autre diode capacitive ($C_b$) possède une capacité qui varie avec la tension de signal appliquée ($U_a$) (figure 4).

5. Montage selon l'une des revendications 1 à 4, caractérisé en ce qu'en parallèle avec la capacité de chaque élément LC du circuit itératif LC est branché un circuit anti-série formé de deux autres diodes capacitives ($C_8,C_9$), dont la capacité totale est déterminée par une tension de polarisation réglable ($U_S$) (figure 5 ou figure 6).

6. Montage selon la revendication 4 ou la revendication 5 rapportée à la revendication 4, caractérisé en ce qu'il comporte un circuit de régulation qui contient:

- un dispositif, qui, à la sortie du circuit itératif LC, mesure les produits de distorsion du second ordre, qui sont apparus à partir d'un ou deux plusieurs signaux pilotes, en tant que mesure de la distorsion non linéaire des signaux transmis,

- un régulateur, qui sur la base des produits de distorsion mesurés, règle la tension de polarisation ($U_a$) d'une diode capacitive ($C_a$) pour obtenir une réduction maximale des produits de distorsion mesurés et règle la tension de polarisation (Ub) de l'autre diode capacitive ($C_b$) sur une valeur maximale constante.

7. Montage selon la revendication 4, caractérisé en ce qu'il possède un circuit de régulation, qui contient,

- un dispositif qui, à la sortie du circuit itératif LC, mesure les produits de distorsion du second ordre, qui sont apparus à partir d'un ou deux plusieurs signaux pilotes, en tant que mesure de la distorsion non linéaire des signaux transmis,

- un dispositif de mesure de la réponse en fréquence, qui à la sortie du circuit itératif LC mesure la différence de niveau de deux signaux pilotes en tant que mesure de la dépendance de l'affaiblissement du circuit itératif LC vis-à-vis de la fréquence,

- n régulateur qui, sur la base des produits de distorsion mesurés, règle la tension de polarisation ($U_a$) d'une diode capacitive ($C_a$) pour obtenir une réduction maximale des produits de distorsion mesurés, et lors de ce réglage, dans le cas où cela est nécessaire, maintient constante la différence de niveau mesurée des deux signaux pilotes moyennant une variation de la tension de polarisation ($U_b$) de l'autre diode capacitive ($C_b$).

8. Montage selon la revendication 5, caractérisé en ce qu'il contient un circuit de régulation, qui contient:

- un dispositif qui, à la sortie du circuit itératif LC, mesure les produits de distorsion du second ordre, qui sont apparus à partir d'un ou deux plusieurs signaux pilotes, en tant que mesure de la distorsion non linéaire des signaux transmis,

- un dispositif de mesure de la réponse en fréquence, qui à la sortie du circuit itératif LC mesure la différence de niveau de deux signaux pilotes en tant que mesure de la dépendance de l'affaiblissement du circuit itératif LC vis-à-vis de la fréquence,

- un régulateur, qui sur la base des produits de distorsion mesurés, règle la tension de polarisation ($U_a$) d'une diode capacitive ($C_a$) pour obtenir une réduction maximale des produits de distorsion mesurés et règle la tension de polarisation ($U_b$) de l'autre diode capacitive ($C_b$) sur une valeur maximale constante, et sur la base de différence de niveau mesuré des signaux pilotes, règle la tension de polarisation ($U_S$), qui détermine la capacité totale du circuit anti-série formé des deux diodes capacitives ($C_8, C_9$) de telle sorte que la différence de niveau des deux signaux pilotes reste dans une large mesure indépendante du réglage, qui est exécuté pour l'obtention d'une réduction maximale des distorsions, la tension de polarisation ($U_a$) d'une diode capacitive ($C_a$).

9. Montage selon la revendication 5, non rapportée à la revendication 4, caractérisé en ce qu'il possède un circuit de régulation, qui contient:

- un dispositif qui, à la sortie du circuit itératif LC, mesure les produits de distorsion du second ordre, qui sont apparus à partir d'un ou deux plusieurs signaux pilotes, en tant que mesure de la distorsion non linéaire des signaux transmis,

- un dispositif de mesure de la réponse en fréquence, qui à la sortie du circuit itératif LC mesure la différence de niveau de deux signaux pilotes en tant que mesure de la dépendance de l'affaiblissement du circuit itératif LC vis-à-vis de la fréquence,

- un régulateur qui, sur la base des produits de distorsion mesurés, règle la tension de polarisation de la diode capacitive pour l'obtention d'une réduction maximale des produits de distorsion mesurés et, sur la base de la différence mesurée des niveaux des signaux pilotes, règle la tension de polarisation, qui détermine la capacité totale du circuit anti-série formé des deux diodes capacitives de telle sorte que la différence de niveau des deux signaux pilotes reste dans une large mesure indépendante du réglage, exécuté pour l'obtention d'une réduction maximale des distorsions, de la tension de polarisation de la diode capacitive.

## Claims

1. Circuit arrangement to compensate for nonlinear distortions in signals transmitted via optical communications systems comprising an LC ladder network ($L_1$, $C_1$, $L_2$, $C_2$, $L_3$, $C_3$), characterized in that the LC ladder network ($L_1$, $C_1$, $L_2$, $C_2$, $L_3$, $C_3$) contains inductances ($L_1$, $L_2$, $L_3$) in the longitudinal arms and reverse-biased varactor diodes ($C_1$, $C_2$, $C_3$) in the shunt arms, or vice versa.

2. Circuit arrangement as claimed in claim 1, characterized in that all varactor diodes are connected to a single DC voltage source which determines their bias.

3. Circuit arrangement as claimed in claim 1, characterized in that the varactor diodes ($C_1$ to $C_3$) are connected to different DC voltage sources ($U_1$, $U_2$, $U_3$) which determine their bias.

4. Circuit arrangement as claimed in one of claims 1 to 3, characterized in that an additional varactor diode ($C_b$) with inverse polarity is connected in parallel to the varactor diode ($C_a$) of each section of the LC ladder network and is also reverse-biased, and that the two bias voltages ($U_a$, $U_b$) are adjustable so that either essentially only the one varactor diode ($C_a$), or essentially only the other varactor diode ($C_b$) has a capacitance that varies with the applied signal voltage ($U_i$) (figure 4).

5. Circuit arrangement as claimed in one of claims 1 to 4, characterized in that an anti-series circuit of two additional varactor diodes ($C_8$, $C_9$) is connected in parallel with the capacitance of each LC section of the LC ladder network, whose total capacitance is determined by an adjustable bias voltage ($U_S$) (figure 5 or figure 6).

6. Circuit arrangement as claimed in claim 4 or 5 with its dependency on claim 4, characterized in that it has a control circuit which contains:

- a device which at the output of the LC ladder network measures the second-order distortion products of one or more pilot signals as a measure of the nonlinear distortion of the transmitted signals, and
- a controller which, on the basis of the measured distortion products, adjusts the bias voltage ($U_a$) of the one varactor diode ($C_a$) to obtain a maximum reduction of the measured distortion products, and adjusts the bias voltage ($U_b$) of the other varactor diode ($C_b$) to a constant maximum value.

7. Circuit arrangement as claimed in claim 4, characterized in that it has a control circuit which contains:

- a device which at the output of the LC ladder network measures the second-order distortion products of one or more pilot signals as a measure of the nonlinear distortion of the transmitted signals,

- a frequency response measuring device which at the output of the LC ladder network measures the level difference of two pilot signals as a measure of the frequency dependence of the LC ladder network's attenuation, and
- a controller which adjusts the bias voltage ($U_a$) of the one varactor diode ($C_a$) on the basis of the measured distortion products, to obtain a maximum reduction of the measured distortion products and, if necessary for this adjustment, maintains the measured level difference of the two pilot signals constant by varying the bias voltage ($U_b$) of the other varactor diode ($C_b$).

8. Circuit arrangement as claimed in claim 5, characterized in that it has a control circuit which contains:

- a device which at the output of the LC ladder network measures the second-order distortion products of one or more pilot signals as a measure of the nonlinear distortion of the transmitted signals,
- a frequency response measuring device which at the output of the LC ladder network measures the level difference of two pilot signals as a measure of the frequency dependence of the LC ladder network's attenuation, and
- a controller which adjusts the bias voltage ($U_a$) of the one varactor diode ($C_a$) on the basis of the measured distortion products to obtain a maximum reduction of the measured distortion products, and adjusts the bias voltage ($U_b$) of the other varactor diode ($C_b$) for a constant maximum value, and on the basis of the measured level difference of the pilot signals adjusts the bias voltage ($U_s$) which determines the total capacitance of the anti-series circuit of both varactor diodes ($C_8$, $C_9$) in a way so that the level difference of the two pilot signals remains substantially independent of the bias voltage ($U_a$) adjustment of the one varactor diode ($C_a$) for a maximum distortion.

9. Circuit arrangement as claimed in claim 5, without its dependency on claim 4, characterized in that it has a control circuit which contains:

- a device which at the output of the LC ladder network measures the second-order distortion products of one or more pilot signals as a measure of the nonlinear distortion of the transmitted signals,
- a frequency response measuring device which at the output of the LC ladder network measures the level difference of two pilot signals as a measure of the frequency dependence of the LC ladder network's attenuation, and

- a controller which adjusts the bias voltage of the varactor diode on the basis of the measured distortion products, to obtain a maximum reduction of the measured distortion products, and on the basis of the measured level difference of the pilot signals adjusts the bias voltage which determines the total capacitance of the anti-series circuit of both varactor diodes in a way so that the level difference of the two pilot signals remains substantially independent of the bias voltage adjustment of the varactor diode for a maximum distortion.

FIG.1

FIG.2

FIG.3

FIG.4

FIG.5

FIG. 6